# EUROPEAN PATENT SPECIFICATION

(11) **EP 0 999 657 B1**
(45) Date of publication and mention of the grant of the patent: **26.01.2005**
(21) Application number: 99121889.2
(22) Date of filing: 04.11.1999
(51) Int. Cl.: H04B 7/005

(54) **CDMA transmission power control capable of preventing call disconnection and degradation of capacity of subscribers**
CDMA Sendeleistungsregelung mit Fähigkeit zur Verhinderung von Anrufsunterbrechung und Teilnehmerskapazitätsbeschädigungen
Commande de la puissance de transmission dans un système CDMA capable de prévenir la déconnexion d'appel et la dégradation de la capacité d'abonnés

(30) Priority: 05.11.1998 JP 31509298
(43) Date of publication of application: 10.05.2000
(73) Proprietor: NEC CORPORATION, Tokyo (JP)
(72) Inventor: Kondo, Seiji, c/o NEC Saitama, Ltd., Kodama-gun, Saitama (JP); Kyusai, Eiko, c/o NEC Mobile Communications, Ltd., Yokohama-shi, Kanagawa (JP)
(74) Representative: Glawe, Delfs, Moll & Partner

(56) References cited:
- MOBILE STATION-BASE STATION COMPATIBILITY STANDARD FOR DUAL-MODE SPREAD SPECTRUM SYSTEMS, 31 October 1998 (1998-10-31), XP002243347
- "AN OVERVIEW OF THE APPLICATION OF CODE DIVISION MULTIPLE ACCESS TO DIGITAL CELLULAR SYSTEMS AND PERSONAL COMMUNICATIONS NETWORKS" SUBMISSION TO THE CELLULAR TELECOMMUNICATIONS INDUSTRY ASSOCIATION (CTIA) CDMA TECHNOLOGY INVESTIGATION SUBCOMMITTEE, XX, XX, 11 January 1991 (1991-01-11), pages 1-64, XP001150463
- TANAKA M ET AL: "Fast initial acquisition of transmitter power for the reverse link DS/CDMA cellular systems" VEHICULAR TECHNOLOGY CONFERENCE, 1998. VTC 98. 48TH IEEE OTTAWA, ONT., CANADA 18-21 MAY 1998, NEW YORK, NY, USA,IEEE, US, 18 May 1998 (1998-05-18), pages 2436-2440, XP010288112 ISBN: 0-7803-4320-4

## Description

### Background of the Invention:

This invention relates to a code division multiple access (CDMA) transmission power control method and system for carrying out a closed loop control for transmission power and, in particular, to a CDMA transmission power control method and system where a base station carries out transmission power control for a mobile station on starting of transmission of a traffic channel. Closed loop controls for transmission power are classified into two types. A first type is a closed loop control where a base station makes the closed loop control of the transmission power for a mobile station. A second type is a closed loop control where a mobile station makes the closed loop control of the transmission power for a base station. Hereinafter, the description will be mainly made about a case where the base station makes the closed loop control of the transmission power for the mobile station.

In recent years, as a communication system for use in a cellular mobile communication system, attention is directed to a code division multiple access (CDMA) communication system which is not affected by interference and interruption. The CDMA communication system is a communication system in which a transmitting side spreads a user signal to be transmitted using a transmission spreading code to transmit a spread signal and a receiving side despreads the spread signal using a reception spreading code identical with the transmission spreading code to obtain an original user signal. In addition, in the CDMA mobile communication system, a plurality of transmitting sides carry out spreading operations using different transmission spreading codes having orthogonality, respectively, and the receiving side can carry out identification of each communication by selecting, as the reception spreading code, one of the transmission spreading codes to be used on carrying out despreading operation. Accordingly, it is possible to use the same frequency band in a plurality of communications.

In the cellular mobile communication system of the CDMA type, it is necessary to increase the number of mobile stations by decreasing interference power between the mobile stations. This is because the mobile stations use the same frequency band. As a result, control to a proper transmission power value is carried out in the cellular mobile communication system of the CDMA type.

In this event, the proper transmission power value is a minimum transmission power value where a data error rate does not exceed a permissible value when the base station receives a signal (a radio wave) from the mobile station. That is, the cellular mobile communication system of the CDMA type controls a received power received in the base station or a signal-to-interference ratio (SIR) determined by the received power so as to make the transmission power constant independent of positions of the mobile stations.

In the manner known in the art, a transmission power control method in the CDMA system is carried out according to rules described in Interim Standard (IS)-95-A standard of Telecommunication Industry Association/Electronic Industries Association (TIA/EIA). More specifically, a closed loop power control where the base station controls the transmission power for the mobile station is carried out. In a sequence of the closed loop power control, the base station measures received energy of a signal from the mobile station and the base station successively transmits, on the basis of a measured result, transmission power control (TPC) bits for controlling the transmission power of the mobile station to the mobile station so that the received energy from the mobile station becomes constant. The transmission power of the mobile station is controlled by using the transmission power control bits.

In other words, the TPC bits are called a TPC information signal. Each base station in the CDMA mobile communication system carries out control of transmission power for each mobile station so that each of received bit energy-to-interference ratios Eb/I0 (which are ratios of the energy of a signal bit (Eb) to the total power spectral density in the received bandwidth (Io)) obtained by communication channels established between the base station and the respective mobile stations is equal to a necessary power ratio Eb/I0 required to insure the minimum communication quality. This transmission power control is called a reverse transmission power control. The TPC information signal for instructing up/down of transmission power for the mobile station is included in a forward signal which is transmitted from the base station to the mobile station via a forward link. By using the TPC information signal, the base station carries out an up instruction or a down instruction of a current transmission power for each mobile station.

In the closed loop power control, on starting of call connection, a null signal serving as an unimportant signal is transmitted from the base station to the mobile station using a forward traffic channel in order to start communication between the base station and the mobile station. When the mobile station receives the null signal from the base station, transmission power control for the mobile station is started. At this time instant, the received energy is reduced in the base station. This is because the mobile station does not carry out transmission using a reverse traffic channel. Therefore, the base station always transmits the transmission power control bits each indicative of increment of the transmission power for the mobile station.

In addition, in the similar manner, although a particular mobile station starts transmission of a preamble signal, the base station cannot immediately receive the preamble signal from the particular mobile station. Therefore, the base station always transmits the transmission power control bits each indicative of the increment of the transmission power for the particular mobile station. Responsive to the transmission power control bits each indicative of the increment of the transmission power for the particular mobile station, the particular mobile station abruptly raises the transmission power thereof and it results in increasing interference for other mobile stations until the base station receives the preamble signal from the particular mobile station. As a result, call disconnection may occur or capacity of subscribers may decrease.

In order to deal with increasing of the interference for the other mobile stations, various CDMA mobile communication systems are known. For instance, Japanese Unexamined Patent Publication of Tokkai No. Hei 10-13,339 or JP-A 10-13339 provides a CDMA (code division multiple access) mobile communication system where a delay time till communication is established is short without transmission by excess power. According to JP-A 10-13339, transmission requesting signals of respective mobile stations, which are received by a common channel, only control the transmission power of an open loop so that control difference is large and the fluctuation of a reception level is also large. But reception power is a degree of 1/a in terms of an average as compared with communication signals so that interference quantity to the communication signals are suppressed to be low. The communication signals are transmitted in accordance with a transmission power control bit which is included in an outgoing signal from a base station. After that, the transmission power of a closed loop is controlled so that the fluctuation of the reception level in the base station is suppressed to be low. When the transmission power of the closed loop is controlled even during the transmission of an incoming signal, interference quantity is, moreover, reduced. At this time, it is also adequate that a transmission power control signal is not included in the outgoing signal from the base station.

That is, in the CDMA mobile communication system according to JP-A 10-13339, an average transmission power is decreased in an interval at which the transmission power control is not sufficiently carried out such as a header portion in a signal, for example, an initial signal in a random access or a burst signal. In other words, the transmission power in the header portion of the signal is decreased in comparison with that in a following signal portion. Therefore, the interference for the other mobile stations is decreased.

As described above, it is possible in the CDMA mobile communication system according to JP-A 10-13339 to decrease the interference for the other mobile stations by decreasing the transmission power in the header portion of the signal in comparison with that in the following signal portion. However, it is impossible in the CDMA mobile communication system according to JP-A 10-13339 to gently carry out the transmission power control for the mobile station on starting of call connection. That is, in the CDMA mobile communication system according to JP-A 10-13339, the base station cannot receive the header portion of the signal if the transmission power of the header portion is decreased too. Accordingly, the CDMA mobile communication system according to JP-A 10-13339 is disadvantageous in that it is impossible to carry out a closed loop power control for the transmission power because the base station cannot receive the signal from the mobile station.

In addition, various other CDMA mobile communication systems related to the present invention are already known. By way of example, Japanese Unexamined Patent Publication of Tokkai No. Hei 8-32,513 or JP-A 8-32513 allows the communication equipment to follow even a rapid fluctuation in power of a communication channel by controlling the transmission power for a consecutive reception block of transmission power control bits identical to each other according to a control variable of transmission power corresponding to number of consecutive reception set in advance and increasing the increment/decrement of the transmission power attended with the lapse to the consecutive reception time. According to JP-A 8-32513, a digital signal received from a reception radio section is given to a despread processing section, in which spread spectrum processing is eliminated and a modulation section. Subsequently, a transmission power control bit extract section extracts the control bit from a demodulated signal. A consecutive number counter of the control section decides a transmission power control variable corresponding to a transmission power control bit and a consecutive number and provides an output to a transmission radio section. On the other hand, each power detected by a desired wave reception power detection section and an interference wave reception power detection section in the despread section is given to an SIR calculation section, in which a reception SIR is obtained. A transmission power control decision section compares the received SIR with an object SIR and adjusts the transmission power of an opposite station. Thus, the system follows rapid fluctuation in power of the communication channel.

Japanese Unexamined Patent Publication of Tokkai No. Hei 8-32,514 or JP-A 8-32514 discloses a transmission power control method and a transmission power controller which is capable of reducing the effect on other mobile stations by selecting an open loop control to set transmission power of a mobile station in response to a change in a desired reception power of a mobile station when the reception signal power of the mobile station is suddenly increased so as to reduce the transmission power of the mobile station in a short time. According to JP-A 8-32514, a mobile station measures an average desired wave reception signal power per one transmission power control period from a base station and calculates an average power of a desired wave reception signal in the unit of the transmission power control period and in the unit of transmission power control of one preceding time or over. When a desired wave reception average power difference exceeds a reference power difference, it is interpreted that the mobile station appears at a location seen through from a shadow of a building (shadowing state). In this case, the desired wave reception signal power in the base station is rapidly increased. On the other hand, the interference power from other mobile station is not so much increased. Instead, interference is imposed upon other mobile stations. Then the intensity of the signal sent from the base station is measured by the mobile station by open loop control and the reception signal is high, then the power of the signal sent to the base station is reduced.

Japanese Unexamined Patent Publication of Tokkai No. Hei 10-210,007 or JP-A 10-210007 discloses a method and device for radio communication which is capable of improving the reliability of communication by properly controlling the number of multiplexed channels of radio protocol information in a radio communication equipment which multiplexes data to perform communication. According to JP-A 10-210007, a modulation circuit is provided which changes the number of multiplexed channels to perform modulation at the time of sending radio protocol information which is to be sent at the time of the start of data transmission following a preamble. Further, a control circuit is provided which manages the error rate of protocol information and the error rate of a data period and changes the number of multiplexed channels of protocol information in accordance with this error rate information and variably controls the transmission power channel of radio protocol information according with this number.

Japanese Unexamined Patent Publication of Tokkai No. Hei 10-224,293 or JP-A 10-224293 discloses a mobile station transmission power controlling method and mobile communication system which is capable of shortening time until transmission power control is converged by sending transmitting power, while adding the quantity to be increased to decreased in the first timing and allowing a mobile station to change the transmitting power according to the quantity. According to JP-A 10-224293, a reception signal power detector detects the reception signal power of an up signal from a mobile station, that is included in a time slot which is demodulated by a demodulator. A control signal generating part generates a transmitting power control signal according to the reception signal power. The control signal generating part generates a control signal that shows transmission power increase and decrease quantity according to the receiving signal power of the first up signal. The control signal is inputted to a slot generator and contained, together with user's information in a time slot. An output of the slot generator is inputted to a modulator and has undergone spread spectrum. An output of the modulator is inputted to a transmitter, its output is inputted to an antenna, and a time slot that includes a down signal is sent as a radio signal to a mobile station. "In Mobile Station-Base Station compatibility Standard for Dual-Mode Spread Spectrum Systems" of October 31, 1998 (TIA/EIA-95-B) a transmission power control in a CDMA-system is disclosed. A base station transmit transmission power control bits based of a received energy in a traffic channel.

### Summary of the Invention:

It is therefore an object of the present invention to provide a CDMA transmission power control method and system which are capable of gently carrying out transmission power control for a mobile station on starting of call connection.

It is another object of the present invention to provide a CDMA transmission power control method and system of the type described, in which impossibility of a closed loop control never occurs when transmission power is decreased too.

It is still another object of the present invention to provide a CDMA transmission power control method and system of the type described, in which the transmission power in the mobile station does not overshoot.

It is yet another object of the present invention to provide a CDMA transmission power control method and system of the type described, in which other mobile stations are not subjected to instantaneous large interference.

It is s further object of the present invention to provide a CDMA transmission power control method and system of the type described, which is capable of preventing call disconnection and degradation of capacity of subscribers.

Other objects of this invention will become clear as the description proceeds.

According to an aspect of this invention, a method is for controlling reverse transmission power in a code division multiple access (CDMA) mobile communication system comprising a base station and a mobile station. The above-mentioned method comprises the steps of starting, in the base station, a reverse transmission power control for the mobile station at a time when the base station transmits a signal using a forward traffic channel, of receiving, in the mobile station, a channel assignment message from the base station to start, using a reverse traffic channel, transmission of a fixed data information signal so as to facilitate reception of a signal on the reverse traffic channel in the base station, of transmitting, from the base station, transmission power control bits of a fixed pattern irrespective of a received energy until up to receive the fixed data information signal to make an open loop control of the reverse transmission power so as to gently increase the reverse transmission power in the mobile station, and on reception of the fixed data information signal from said mobile station, of switching, in the base station, the reverse transmission power control from the open loop control to a closed loop control on the basis of the received energy of a signal on the reverse traffic channel from the mobile station to make the closed loop control of the reverse transmission power of the mobile station.

According another aspect of this invention, a method is of controlling forward transmission power in a code division multiple access (CDMA) mobile communication system comprising a mobile station and a base station. The afore-mentioned method comprises the steps of starting, in the mobile station, a forward transmission power control for the base station at a time when the mobile station transmits a signal using a reverse traffic channel, of receiving, in the base station, a channel assignment message from the mobile station to start, using a forward traffic channel, transmission of a fixed data information signal so as to facilitate reception of a signal on the forward traffic channel in said mobile station, of transmitting, from the mobile station, transmission power control bits of a fixed pattern irrespective of a received energy until up to receive the fixed data information signal to make an open loop control of the forward transmission power so as to gently increase the forward transmission power in the base station, and on reception of the fixed data information signal from the base station, of switching, in the mobile station, the forward transmission power control from the open loop control to a closed loop control on the basis of the received energy of a signal on the forward traffic channel from the base station to make the closed loop control of the forward transmission power of the base station.

### Brief Description of the Drawing:

Fig. 1 is a block diagram of a code division multiple access (CDMA) mobile communication system or a CDMA transmission power control system to which a CDMA transmission power control method according to a first embodiment of this invention is applicable;
Fig. 2 shows a format of a signal received on a reverse traffic channel in power control group number 5 and the corresponding to power control bit transmitted on a forward traffic channel during power control group number 5 + 2 = 7;
Fig. 3 is a sequence diagram for use in describing operation between a base station and a mobile station in the CDMA transmission power control system illustrated in Fig. 1;
Fig. 4 is a flowchart showing a processing procedure in a reverse transmission power control of a base station on turning to a traffic channel in the CDMA transmission power control system illustrated in Fig. 1; and
Fig. 5 is a block diagram of a code division multiple access (CDMA) mobile communication system or a CDMA transmission power control system to which a CDMA transmission power control method according to a second embodiment of this invention is applicable.

### Description of the Preferred Embodiments:

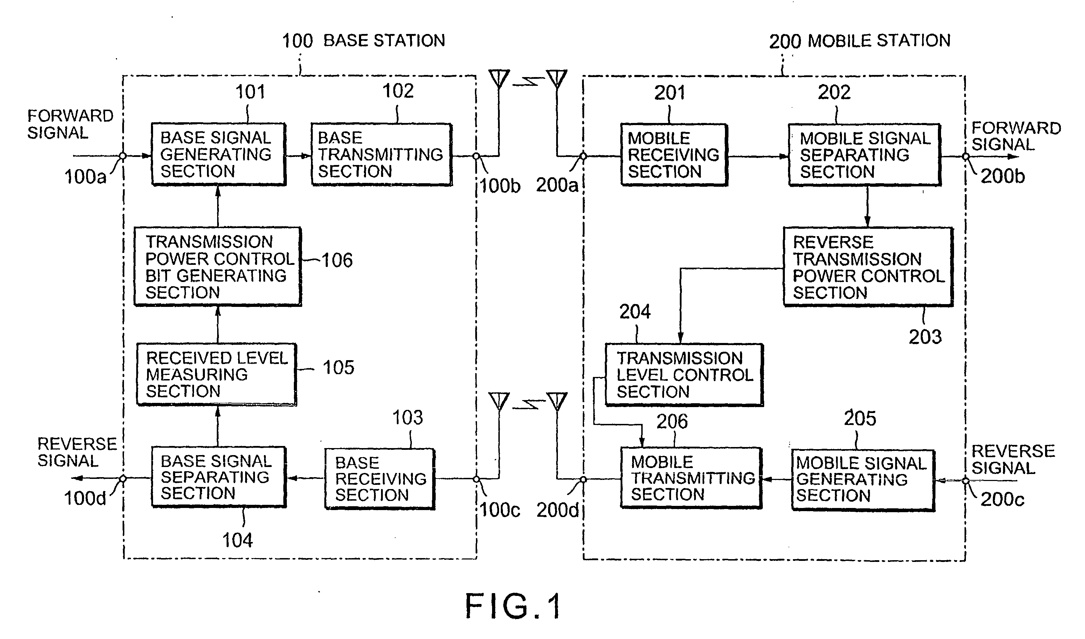

Referring to Fig. 1, the description will proceed to a code division multiple access (CDMA) mobile communication system or a CDMA transmission power control system to which a CDMA transmission power control method according to a first embodiment of this invention is applicable. The illustrated CDMA transmission power control system comprises a base station 100 and a mobile station 200.

The base station 100 has a forward signal base input terminal 100a supplied with an input forward signal, a forward signal base output terminal 100b for transmitting a forward transmission signal, a reverse signal base input terminal 100c supplied with a received reverse signal, and a reverse signal base output terminal 100d for outputting an output reverse signal.

The mobile station 200 has a forward signal mobile input terminal 200a supplied with a forward received signal, a forward signal mobile output terminal 200b for outputting an output forward signal, a reverse signal mobile input terminal 200c supplied with an input reverse signal, and a reverse signal mobile output terminal 200d for transmitting a reverse transmission signal.

The base station 100 comprises a base signal generating section 101 connected to the forward signal base input terminal 100a, a base transmitting section 102 connected to the base signal generating section 101 and the forward signal base output terminal 100b, a base receiving section 103 connected to the reverse signal base input terminal 100c, a base signal separating section 104 connected to the base receiving section 103 and the reverse signal base output terminal 100d, a received level measuring section 105 connected to the base signal separating section 104, and a transmission power control bit generating section 106 connected to the received level measuring section 105 and the base signal generating section 101.

The base receiving section 103 receives a traffic channel signal from the mobile station 200 as the received reverse signal. The base receiving section 103 demodulates the received reverse signal into a reverse demodulated signal. The reverse demodulated signal is supplied to the base signal separating section 104. The base signal separating section 104 separates the reverse demodulated signal into first and second data signals. The first data signal is a data signal to be decoded while the second data signal is a data signal for use in measuring a received energy of the received reverse signal. The second data signal is supplied to the received level measuring section 105. In addition, the base signal separating section 104 despreads the first data signal using a reverse spreading code assigned to the base station 100 to produce a despread demodulated signal in the manner known in the art. The despread demodulated signal is supplied to the reverse signal base output terminal 100d as the output reverse signal.

The received level measuring section 105 measures, on the basis of the second data signal, a received energy (Eb/N0) of the received reverse signal. The received level measuring section 105 produces a measured result signal indicative of the received energy (Eb/I0) of the received reverse signal.

The measured result signal is supplied to the transmission power control bit generating section 106. On the basis of the measured result signal, the transmission power control bit generating section 106 generates transmission power control bits for carrying out transmission power control of the mobile station 200. The transmission power control bits are supplied to the base signal generating section 101. The base signal generating section 101 is also supplied from the forward signal base input terminal 100a with a forward traffic channel signal as the input forward signal. The base signal generating section 101 inserts the transmission power control bits in the forward traffic channel signal to obtain an inserted forward signal. In addition, in the manner known in the art, the base signal generating section 101 spreads a spectrum of the inserted forward signal using a forward spreading code assigned to the mobile station 200 to produce a spread forward signal which is supplied to the base transmitting section 102. The base transmitting section 102 modulates a carrier signal with the spread forward signal and transmits a forward modulated signal as the forward transmission signal via a base antenna.

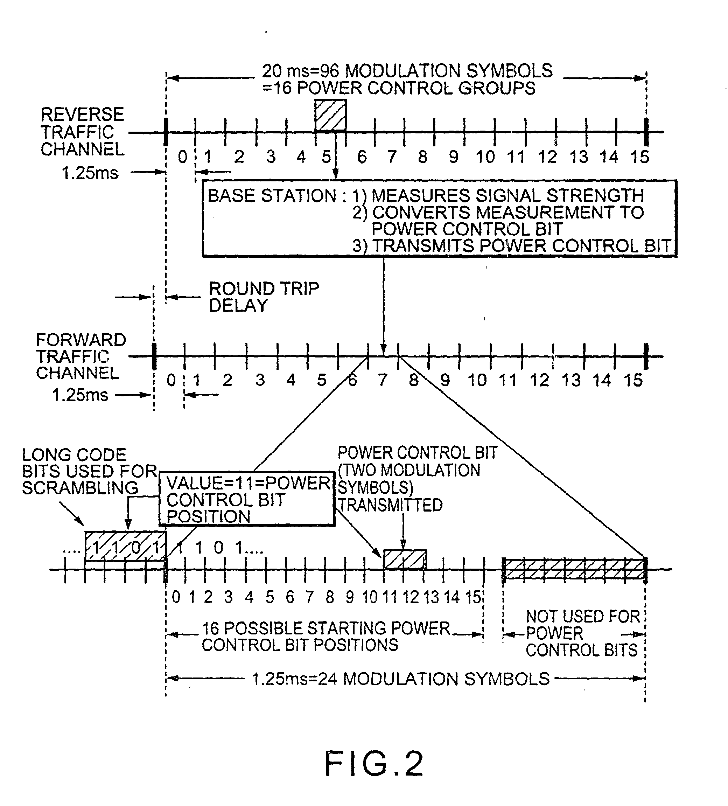

Turning to Fig. 2, the description will proceed to transmission power control bits defined by a standard of TIA/EIA/SP-3693 in the IS-95 system. Each transmission power control bit is transmitted at a rate of one bit (a logic "0" or a logic "1") every 1.25 ms (i.e., 800 bps). The logic "0" bit shall indicate to the mobile station 200 that it is to increase a mean output power level while the logic "1" bit shall indicate to the mobile station 200 that it is to decrease the mean output power level. In addition, the transmission power control bits are transmitted using a frame of 20 ms. One frame corresponds to sixteen power control groups. That is, sixteen transmission power control bits are transmitted every frame.

Turning back to Fig. 1, the transmission power control bit generating section 106 generates the transmission power control bits having a fixed pattern before or until the base station 100 receives a preamble signal or a fixed data information signal. When or after the base station 100 receives the preamble signal, the transmission power control bit generating section 106 determines a reverse transmission power of the mobile station 200 on the basis of the received energy (Eb/N0) of a signal on a reverse traffic channel from the mobile station 200. In determination of the reverse transmission power, it is possible to variably set the reverse transmission power control on controlling the reverse transmission power of the mobile station 200 using the transmission power control bits having the fixed pattern. For instance, in a case of wishing to suddenly increase the reverse transmission power of the mobile station 200, all of the sixteen transmission power control bits per frame are set so as to indicate increment of the reverse transmission power of the mobile station 200. In a case of wishing to suddenly decrease the reverse transmission power of the mobile station 200, all of the sixteen transmission power control bits per frame are set so as to indicate decrement of the reverse transmission power of the mobile station 200. In addition, in a case of wishing to gently increase the reverse transmission power of the mobile station 200, the sixteen transmission power control bits per frame are set so as to repeatedly indicate increment and decrement of the reverse transmission power of the mobile station 200.

The mobile station 200 comprises a mobile receiving section 201 connected to the forward signal mobile input terminal 200a, a mobile signal separating section 202 connected to the mobile receiving section 201 and the forward signal mobile output terminal 200b, a reverse transmission power control section 203 connected to the mobile signal separating section 202, a transmission level control section 204 connected to the reverse transmission power control section 203, a mobile signal generating section 205 connected to the reverse signal mobile input terminal 200c, and a mobile transmitting section 206 connected to the mobile signal generating section 205, the transmission level control section 204, and the reverse signal mobile output terminal 200d.

The mobile receiving section 201 receives the forward transmission signal from the base station 100 as the forward received signal. The mobile receiving section 201 demodulates the forward received signal into a forward demodulated signal. The forward demodulated signal is supplied to the mobile signal separating section 202. The mobile signal separating section 202 despreads the forward demodulated signal using the forward spreading code assigned to the mobile station 200 to obtain a despread forward signal. In addition, the mobile signal separating section 202 separates the spread forward signal into the output forward signal and the transmission power control bits. The transmission power control bits are supplied to the reverse transmission power control section 203. The reverse transmission power control section 203 determines, on the basis of the transmission power control bits, the transmission power of the reverse signal to produce a determined result signal indicative of a determined transmission power. The determined result signal is supplied to the transmission level control section 204.

The mobile signal generating section 205 is supplied with the input reverse signal from the reverse signal mobile input terminal 200c. Responsive to the input reverse signal, the mobile signal generating section 205 spreads a spectrum of the input reverse signal using the reverse spreading code assigned to the base station 100 to generate a spread reverse signal in the manner known in the art. The spread reverse signal is supplied to the mobile transmitting section 206. The mobile transmitting section 206 modulates a carrier signal with the spread reverse signal into a reverse modulated signal in the manner known in the art. The mobile transmitting section 206 transmits the reverse modulated signal as the reverse transmission signal with a transmission level of the reverse transmission signal controlled by the transmission level control section 204.

Now, the description will be made as regards operation of the CDMA transmission power control system illustrated in Fig. 1.

In the base station 100, the base receiving section 103 receives a reverse traffic channel transmission signal from the mobile station 200 as a reverse traffic channel received signal. The base receiving section 103 demodulates the reverse traffic channel received signal into a reverse traffic channel demodulated signal. The reverse traffic channel demodulated signal is supplied to the mobile signal separating section 104. The mobile signal separating section 104 separates the reverse traffic channel demodulated signal into the first and the second data signals. On the basis of the second data signal, the received level measuring section 105 measures the received energy (Eb/N0) of the reverse traffic channel received signal to produce the measured result signal indicative of the received energy (Eb/N0).

Furthermore, in the base station 100, the transmission power control bit generating section 106 successively generates, on the basis of the measured result signal, the transmission power control bits for use in carrying out the transmission power control of the mobile station 200. Subsequently, the base signal generating section 101 inserts the transmission power control bits in the forward traffic channel signal to obtain the inserted forward signal. In addition, the base signal generating section 101 spreads the spectrum of the inserted forward signal using the forward spreading code assigned to the mobile station 200 to produce the spread forward signal. The base transmitting section 102 modulated the carrier signal with the spread forward signal to transmit the modulated forward signal as the transmission forward signal via the base antenna to the mobile station 200.

In the manner as described above, the transmission power control bit generating section 106 of the base station generates the transmission power control bits of the fixed pattern until the base station 100 receives the preamble signal from the mobile station 200. When or after the base station 100 receives the preamble signal from the mobile station 200, the transmission power control bit generating section 106 determines, on the basis of the received energy (Eb/N0) indicated by the measured result signal supplied from the received level measuring section 105, the reverse transmission power for the mobile station 200. In a case where the reverse transmission power of the mobile station 200 is controlled by using the transmission power control bits of the fixed pattern, it is possible to variably set a control mode of the reverse transmission power.

For instance, in a case of wishing to suddenly increase the reverse transmission power of the mobile station 200, all of the sixteen transmission power control bits per frame are set so as to indicate increment of the reverse transmission power of the mobile station 200. In a case of wishing to suddenly decrease the reverse transmission power of the mobile station 200, all of the sixteen transmission power control bits per frame are set so as to indicate decrement of the reverse transmission power of the mobile station 200. In addition, in a case of wishing to gently increase the reverse transmission power of the mobile station 200, the sixteen transmission power control bits per frame are set so as to repeatedly indicate increment and decrement of the reverse transmission power of the mobile station 200.

In the mobile station 200, the mobile receiving section 201 receives the transmission forward signal from the base station 100 as the received forward signal. The mobile receiving section 201 demodulates the received forward signal into the demodulated forward signal. The mobile signal separating section 202 despreads the demodulated forward signal using the forward spreading code assigned to the mobile station 200 to obtain the despread forward signal. Subsequently, the mobile signal separating section 202 separates the despread forward signal into the forward data signal and the transmission power control bits which are inserted by the base station 100. On the basis of the transmission power control bits separated by the mobile signal separating section 202, the reverse transmission power control section 203 determines the reverse transmission power of the reverse signal. On the basis of the reverse transmission power determined by the reverse transmission power control section 203, the transmission level control section 204 supplies the mobile transmitting section with a transmission level control signal for controlling the reverse transmission power.

On the other hand, the mobile signal generating section 205 generates the spread reverse signal in the manner as described above. The mobile transmitting section 206 modulates the carrier signal with the spread reverse signal into the modulated reverse signal. The mobile transmission section 206 transmits, via a mobile antenna, the modulated reverse signal as the transmission reverse signal with the reverse transmission power of the transmission reverse signal controlled by the transmission level control signal.

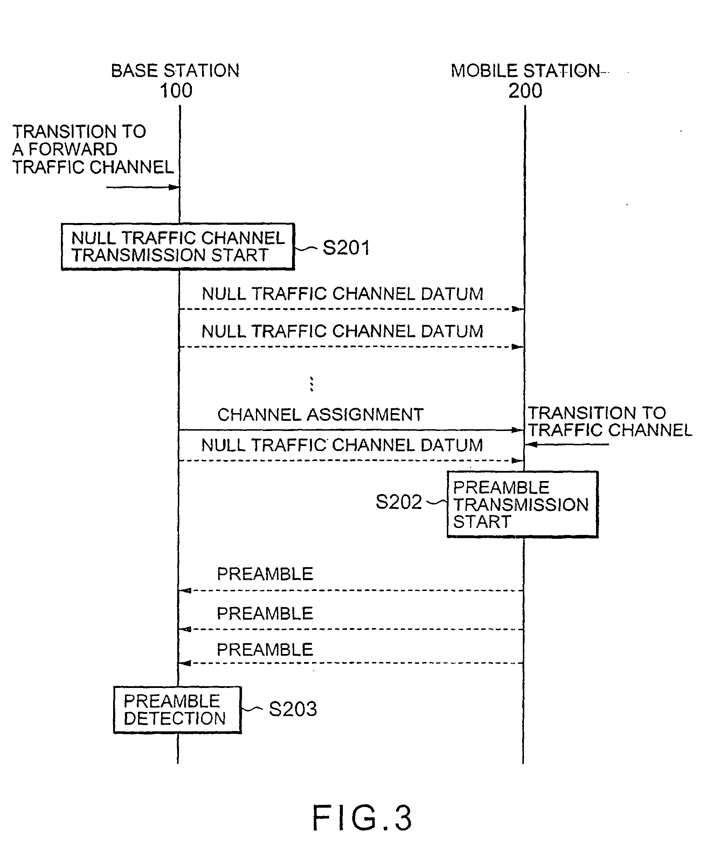

Turning to Fig. 3, the description will now proceed to a principal part of the above-mentioned operation. Fig. 3 is a sequence chart corresponding to the operation between the base station 100 and the mobile station 200.

According to call connection in IS-95-A standard of TIA/EIA, in order to start communication with the mobile station 200 using the traffic channel, the base station 100 transmits a null signal consisting of fixed data using a forward traffic channel as a step S201. When the mobile station 200 receives a channel assignment message and the null signal from the base station 100, the mobile station 200 starts transmission of a preamble signal at a step S202. Subsequently, the base station 100 detects the preamble signal at a step S203 and establishment of reverse and forward traffic channels comes to end.

The mobile station 200 starts transmission power control when the mobile station 200 receives the null signal from the base station 100. At this time instant, the mobile station 200 does not yet transmit the preamble signal. Responsive to the channel assignment message from the base station 100, the mobile station 200 is turned to a reverse traffic channel.

When the mobile station 200, which receives the channel assignment message from the base station 100, detects the null signal on the forward traffic channel, the mobile station 200 transmits the preamble signal. In this event, the reverse transmission power is variably set in accordance with the transmission power control bits transmitted from the base station 100.

The base station 100 cannot detect the reverse transmission power in the mobile station 200 during a time duration between a time instant on transmission start of the null signal and a time instant at which the preamble signal is detected. Accordingly, the transmission power control bit generating section 106 carries out the transmission power control for the mobile station 200 using the transmission power control bits of the fixed pattern so as to gently increase the reverse transmission power of the mobile station 200.

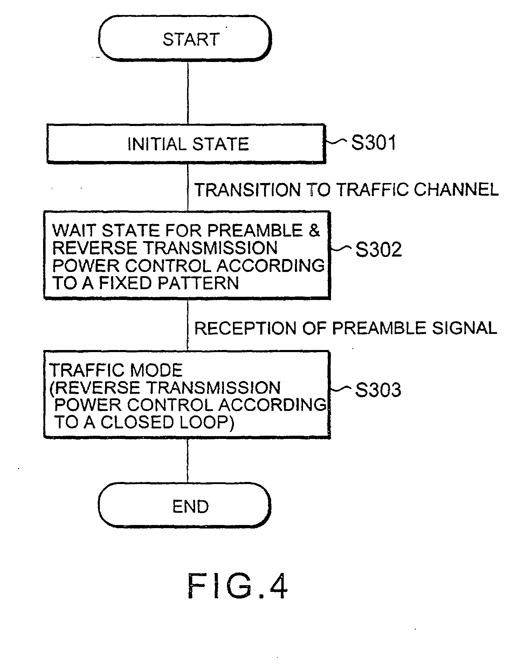

Fig. 4 is a flowchart showing processing procedure of the reverse transmission power control in the base station 100 on transition of the traffic channel.

This processing is carried out by the transmission power control bit generating section 106. The transmission power control bit generating section 106 is put into an initial state at a step S301. It will be assumed that the transmission power control bit generating section 106 is turned from the initial state to the traffic channel. Responsive to the transition of the traffic channel, the base station 100 is turned to a wait state for the preamble signal at a step S302. In this event, the base station 100 transmits, using the forward traffic channel, the null signal in which the transmission power control bits of the fixed pattern are inserted. When the base station 100 receives the preamble signal, the step S302 is followed by a step at which the base station 100 is turned to a traffic mode where the base station 100 controls the reverse transmission power for the mobile station 200 on the basis of the received power of the reverse signal from the mobile station 200.

Although the description will be made in the above-mentioned embodiment as regards the transmission power control method in the CDMA system in a case where the base station 100 carries out a closed loop control of the reverse transmission power for the mobile station in accordance with the IS-95-A standard in TIA/EIA, on the contrary, the mobile station may carry out a closed loop control of a forward transmission power for the base station. In this event, it may be constituted so as to change the base station 100 and the mobile station 200 illustrated in Fig. 1.

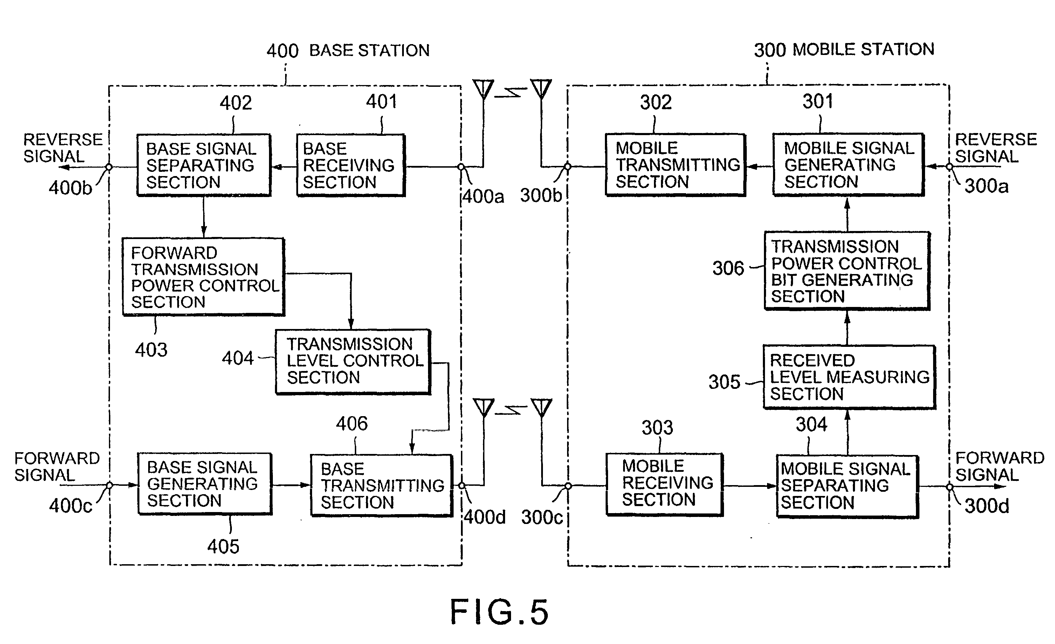

Referring to Fig. 5, the description will proceed to a code division multiple access (CDMA) mobile communication system or a CDMA transmission power control system to which a CDMA transmission power control method according to a second embodiment of this invention is applicable. The illustrated CDMA transmission power control system comprises a mobile station 300 and a base station 400.

The mobile station 300 has a reverse signal mobile input terminal 300a supplied with an input reverse signal, a reverse signal mobile output terminal 300b for transmitting a reverse transmission signal, a forward signal mobile input terminal 300c supplied with a forward received signal, and a forward signal mobile output terminal 300d for outputting an output forward signal.

The base station 400 has a reverse signal base input terminal 400a supplied with a received reverse signal, a reverse signal base output terminal 400b for outputting an output reverse signal, a forward signal base input terminal 400c supplied with an input forward signal, and a forward signal base output terminal 400d for transmitting a forward transmission signal.

The mobile station 300 comprises a mobile signal generating section 301 connected to the reverse signal mobile input terminal 300a, a mobile transmitting section 302 connected to the mobile signal generating section 301 and the reverse signal mobile output terminal 300b, a mobile receiving section 303 connected to the forward signal mobile input terminal 300c, a mobile signal separating section 304 connected to the mobile receiving section 303 and the forward signal mobile output terminal 300d, a received level measuring section 305 connected to the mobile signal separating section 304, and a transmission power control bit generating section 306 connected to the received level measuring section 305 and the mobile signal generating section 301.

The mobile receiving section 303 receives a traffic channel signal from the base station 400 as the forward received signal. The mobile receiving section 303 demodulates the forward received signal into a forward demodulated signal. The forward demodulated signal is supplied to the mobile signal separating section 304. The mobile signal separating section 304 separates the forward demodulated signal into first and second data signals. The first data signal is a data signal to be decoded while the second data signal is a data signal for use in measuring a received energy of the forward received signal. The second data signal is supplied to the received level measuring section 305. In addition, the mobile signal separating section 304 despreads the first data signal using a forward spreading code assigned to the mobile station 300 to produce a despread demodulated signal in the manner known in the art. The despread demodulated signal is supplied to the forward signal base output terminal 300d as the output forward signal.

The received level measuring section 305 measures, on the basis of the second data signal, a received energy (Eb/N0) of the forward received signal. The received level measuring section 305 produces a measured result signal indicative of the received energy (Eb/I0) of the forward received signal.

The measured result signal is supplied to the transmission power control bit generating section 306. On the basis of the measured result signal, the transmission power control bit generating section 306 generates transmission power control bits for carrying out transmission power control of the base station 400. The transmission power control bits are supplied to the mobile signal generating section 301. The mobile signal generating section 301 is also supplied from the reverse signal mobile input terminal 300a with a reverse traffic channel signal as the input reverse signal. The mobile signal generating section 301 inserts the transmission power control bits in the reverse traffic channel signal to obtain an inserted reverse signal. In addition, in the manner known in the art, the mobile signal generating section 301 spreads a spectrum of the inserted reverse signal using a reverse spreading code assigned to the base station 400 to produce a spread reverse signal which is supplied to the mobile transmitting section 302. The mobile transmitting section 302 modulates a carrier signal with the spread reverse signal and transmits a reverse modulated signal as the reverse transmission signal via a mobile antenna.

The transmission power control bit generating section 306 generates the transmission power control bits having a fixed pattern before or until the mobile station 300 receives a preamble signal. When or after the mobile station 300 receives the preamble signal, the transmission power control bit generating section 306 determines a forward transmission power of the base station 400 on the basis of the received energy (Eb/N0). In determination of the forward transmission power, it is possible to variably set the forward transmission power control on controlling the forward transmission power of the base station 400 using the transmission power control bits having the fixed pattern. For instance, in a case of wishing to suddenly increase the forward transmission power of the base station 400, all of the sixteen transmission power control bits per frame are set so as to indicate increment of the forward transmission power of the base station 400. In a case of wishing to suddenly decrease the forward transmission power of the base station 400, all of the sixteen transmission power control bits per frame are set so as to indicate decrement of the forward transmission power of the base station 400. In addition, in a case of wishing to gently increase the forward transmission power of the base station 400, the sixteen transmission power control bits per frame are set so as to repeatedly indicate increment and decrement of the forward transmission power of the base station 400.

The base station 400 comprises a base receiving section 401 connected to the reverse signal base input terminal 400a, a base signal separating section 402 connected to the base receiving section 401 and the reverse signal base output terminal 400b, a forward transmission power control section 403 connected to the base signal separating section 402, a transmission level control section 404 connected to the forward transmission power control section 403, a base signal generating section 405 connected to the forward signal base input terminal 400c, and a base transmitting section 406 connected to the base signal generating section 405, the transmission level control section 404, and the forward signal base output terminal 400d.

The base receiving section 401 receives the reverse transmission signal from the mobile station 300 as the received reverse signal. The base receiving section 401 demodulates the received reverse signal into a reverse demodulated signal. The reverse demodulated signal is supplied to the reverse signal separating section 402. The base signal separating section 402 despreads the reverse demodulated signal using the reverse spreading code assigned to the base station 400 to obtain a despread reverse signal. In addition, the base signal separating section 402 separates the spread reverse signal into the output reverse signal and the transmission power control bits. The transmission power control bits are supplied to the forward transmission power control section 403. The forward transmission power control section 403 determines, on the basis of the transmission power control bits, the transmission power of the forward signal to produce a determined result signal indicative of a determined transmission power. The determined result signal is supplied to the transmission level control section 404.

The base signal generating section 405 is supplied with the input forward signal from the forward signal base input terminal 400c. Responsive to the input forward signal, the base signal generating section 405 spreads a spectrum of the input forward signal using the forward spreading code assigned to the mobile station 300 to generate a spread forward signal in the manner known in the art. The spread forward signal is supplied to the base transmitting section 406. The base transmitting section 406 modulates a carrier signal with the spread forward signal into a forward modulated signal in the manner known in the art. The base transmitting section 406 transmits the forward modulated signal as the forward transmission signal with a transmission level of the forward transmission signal controlled by the transmission level control section 404.

With this structure, it is possible to improve degree of freedom in design or construction of a communication network in a CDMA mobile communication system to which this invention is applicable.

While this invention has thus far been described in conjunction with a few preferred embodiments thereof, it will now be readily possible for those skilled in the art to put this invention into various other manners.

## Claims

1. A method of controlling reverse transmission power in a code division multiple access, CDMA, mobile communication system comprising a base station (100) and a mobile station (200), **characterised in that** said method comprising the steps of:
starting (S201), in said base station (100), a reverse transmission power control for said mobile station (200) at a time when said base station transmits a signal using a forward traffic channel;
receiving (S202), in said mobile station (200), a channel assignment message from said base station to start, using a reverse traffic channel, transmission of a fixed data information signal so as to facilitate reception of a signal on the reverse traffic channel in said base station;
transmitting (S301), from said base station (100), transmission power control bits of a fixed pattern irrespective of a received energy until up to receive the fixed data information signal to make an open loop control of the reverse transmission power so as to gently increase the reverse transmission power in said mobile station; and
on reception of the fixed data information signal from said mobile station, switching (S303), in said base station (100), said reverse transmission power control from the open loop control to a closed loop control on the basis of the received energy of a signal on the reverse traffic channel from said mobile station to make the closed loop control of the reverse transmission power of said mobile station.

2. A code division multiple access, CDMA, transmission power control system comprising a base station (100) and a mobile station (200), **characterised in that** said mobile station (200) comprises:
means (S202) for receiving a channel assignment message from said base station; and
means (S202) for starting, on reception of the channel assignment message, transmission of a fixed data information signal so as to facilitate reception of a signal in said base station,
said base station (100) comprising:
means (S201) for starting a reverse transmission power control for said mobile station at a time which said base station transmits a signal using a forward traffic channel;
means (S302) for transmitting transmission power control bits of a fixed pattern irrespective of a received energy until up to receive the fixed data information signal to make an open loop control of reverse transmission power so as to gently increase the reverse transmission power in said mobile station; and
means (S303) for switching, on reception of the fixed data information signal, said reverse transmission power control from the open loop control to a closed loop control on the basis of the received energy of the signal from said mobile station to make the closed loop control of the reverse transmission power of said mobile station.

3. A CDMA transmission power control system as claimed in claim 2, **characterised in that** said mobile station (200) comprises:
a mobile receiving section (201) for receiving a forward transmission signal transmitted from said base station as a received forward signal;
a mobile signal separating section (202), connected to said mobile receiving section, for separating the received forward signal into a forward data signal into transmission power control bits which are inserted in said base station;
a reverse transmission power control section (203), connected to said mobile signal separating section, for determine reverse transmission power for a reverse signal on the basis of the transmission power control bits to produce a determined transmission power signal indicative of the reverse transmission power;
a transmission level control section (204), connected to said reverse transmission power control section, for producing a transmission level control signal on the basis of the determined transmission power signal;
a mobile signal generating section (205) for generating a reverse signal; and
a mobile transmitting section (206), connected to said mobile signal generating section and said transmission level control section, for transmitting the reverse signal with a transmission level of the reverse signal controlled by the transmission level control signal.

4. A CDMA transmission power control system as claimed in claim 2, **characterised in that** said base station (100) comprises:
a base receiving section (103) for receiving a traffic channel signal from said mobile station;
a base signal separating section (104), connected to said base receiving section, for separating the traffic channel signal into a first data signal to be decoded and a second data signal to be measured;
a received level measuring section (105), connected to said base signal separating section, for a received energy of the traffic channel signal on the basis of the second data signal to produce a measured result signal indicative of the received energy;
a transmission power control bit generating section (106), connected to said received level measuring section, for generating, on the basis of the measured result signal, transmission power control bits for carrying out transmission power control for said mobile station;
a base signal generating section (101), connected to said transmission power control bit generating section, for inserting the transmission power control bits in a forward traffic channel signal to generating a forward signal; and
a base transmitting section (102), connected to said base signal generating section, for transmitting the forward signal.

5. A CDMA transmission power control system as claimed in claim 4, **characterised in that** said transmission power control bit generating section (106) generates the transmission power control bits of the fixed pattern during up to receive the fixed data information signal, said transmission power control bit generating section (106) determining the reverse transmission power for said mobile station on the basis of the received energy after reception of the fixed data information signal.

6. A CDMA transmission power control system as claimed in claim 5, **characterised in that** said transmission power control bit generating section (106) variably sets the reverse transmission power control in a case of controlling the reverse transmission power using the transmission power control bits of the fixed pattern.

7. A CDMA transmission power control system as claimed in claim 6, **characterised in that** said transmission power control bit generating section (106) sets, as variably setting of the reverse transmission power control, all of the transmission power control bits so as to increase the reverse transmission power.

8. A CDMA transmission power control system as claimed in claim 6, **characterised in that** said transmission power control bit generating section (106) sets, as variably setting of the reverse transmission power control, all of the transmission power control bits so as to decrease the reverse transmission power.

9. A CDMA transmission power control system as claimed in claim 6, **characterised in that** said transmission power control bit generating section (106) sets, as variably setting of the reverse transmission power control, the transmission power control bits so as to gently increase the reverse transmission power.

10. A CDMA transmission power control system as claimed in claim 2, **characterised in that** said base station (100) performs the closed loop control of the reverse transmission power for said mobile station according to IS-95-A standard of TIA/EIA.

11. A method of controlling forward transmission power in a code division multiple access, CDMA, mobile communication system comprising a mobile station (300) and a base station (400), **characterised in that** said method comprising the steps of:
starting, in said mobile station (300), a forward transmission power control for said base station at a time when said mobile station transmits a signal using a reverse traffic channel;
receiving, in said base station (400), a channel assignment message from said mobile station to start, using a forward traffic channel, transmission of a fixed data information signal so as to facilitate reception of a signal on the forward traffic channel in said mobile station;
transmitting, from said mobile station (300), transmission power control bits of a fixed pattern irrespective of a received energy until up to receive the fixed data information signal to make an open loop control of the forward transmission power so as to gently increase the forward transmission power in said base station; and
on reception of the fixed data information signal from said base station, switching, in said mobile station (300), said forward transmission power control from the open loop control to a closed loop control on the basis of the received energy of a signal on the forward traffic channel from said base station to make the closed loop control of the forward transmission power of said base station.

12. A code division multiple access (CDMA) transmission power control system comprising a mobile station (300) and a base station (400), **characterised in that** said base station (400) comprises:
means for receiving a channel assignment message from said mobile station; and
means for starting, on reception of the channel assignment message, transmission of a fixed data information signal so as to facilitate reception of a signal in said mobile station,
said mobile station (300) comprising:
means for starting a forward transmission power control for said base station at a time which said mobile station transmits a signal using a reverse traffic channel;
means for transmitting transmission power control bits of a fixed pattern irrespective of a received energy until up to receive the fixed data information signal to make an open loop control of forward transmission power so as to gently increase the forward transmission power in said base station; and
means for switching, on reception of the fixed data information signal, said forward transmission power control from the open loop control to a closed loop control on the basis of the received energy of the signal from said base station to make the closed loop control of the forward transmission power of said base station.

13. A CDMA transmission power control system as claimed in claim 12, **characterised in that** said base station (400) comprises:
a base receiving section (401) for receiving a reverse transmission signal transmitted from said mobile station as a received reverse signal;
abase signal separating section (402) , connected to said base receiving section, for separating the received reverse signal into a reverse data signal into transmission power control bits which are inserted in said mobile station;
a forward transmission power control section (403), connected to said base signal separating section, for determine forward transmission power for a forward signal on the basis of the transmission power control bits to produce a determined transmission power signal indicative of the forward transmission power;
a transmission level control section (404), connected to said forward transmission power control section, for producing a transmission level control signal on the basis of the determined transmission power signal;
a base signal generating section (405) for generating a forward signal; and
abase transmitting section (406) , connected to saidbase signal generating section and said transmission level control section, for transmitting the forward signal with a transmission level of the forward signal controlled by the transmission level control signal.

14. A CDMA transmission power control system as claimed in claim 12, **characterised in that** said mobile station (300) comprises:
a mobile receiving section (303) for receiving a traffic channel signal from said base station;
a mobile signal separating section (304), connected to said mobile receiving section, for separating the traffic channel signal into a first data signal to be decoded and a second data signal to be measured;
a received level measuring section (305), connected to said mobile signal separating section, for a received energy of the traffic channel signal on the basis of the second data signal to produce a measured result signal indicative of the received energy;
a transmission power control bit generating section (306), connected to said received level measuring section, for generating, on the basis of the measured result signal, transmission power control bits for carrying out transmission power control for said base station;
a mobile signal generating section (301), connected to said transmission power control bit generating section, for inserting the transmission power control bits in a reverse traffic channel signal to generating a reverse signal; and
a mobile transmitting section (302), connected to said mobile signal generating section, for transmitting the reverse signal.

15. A CDMA transmission power control system as claimed in claim 14, **characterised in that** said transmission power control bit generating section (306) generates the transmission power control bits of the fixed pattern during up to receive the fixed data information signal, said transmission power control bit generating section (306) determining the forward transmission power for said base station on the basis of the received energy after reception of the fixed data information signal.

16. A CDMA transmission power control system as claimed in claim 15, **characterised in that** said transmission power control bit generating section (306) variably sets the forward transmission power control in a case of controlling the forward transmission power using the transmission power control bits of the fixed pattern.

17. A CDMA transmission power control system as claimed in claim 16, **characterised in that** said transmission power control bit generating section (306) sets, as variably setting of the forward transmission power control, all of the transmission power control bits so as to increase the forward transmission power.

18. A CDMA transmission power control system as claimed in claim 16, **characterised in that** said transmission power control bit generating section (306) sets, as variably setting of the forward transmission power control, all of the transmission power control bits so as to decrease the forward transmission power.

19. A CDMA transmission power control system as claimed in claim 16, **characterised in that** said transmission power control bit generating section (306) sets, as variably setting of the forward transmission power control, the transmission power control bits so as to gently increase the forward transmission power.

## Patentansprüche

1. Verfahren der Steuerung von Rückübertragungsleistung in einem mobilen Kommunikationssystem mit Codeteilungs-Mehrfachzugriff, CDMA, mit einer Basisstation (100) und einer Mobilstation (200), **dadurch gekennzeichnet, dass** das Verfahren die Schritte aufweist:
Beginnen (S201) einer Rückübertragungsleistungssteuerung für die Mobilstation (200) in der Basisstation (100) zu einem Zeitpunkt, wenn die Basisstation ein Signal unter Verwendung eines Vorwärtsverkehrskanals sendet,
Empfangen (S202) einer Kanalzuweisungsnachricht von der Basisstation in der Mobilstation (200) unter Verwendung eines Rückverkehrskanals, Senden eines festen Dateninformationssignals, um den Empfang eines Signals auf dem Rückverkehrskanal in der Basisstation zu erleichtern,
Übertragen (S301) von Übertragungsleistungssteuerbits mit einem festen Muster unabhängig von einer empfangenen Energie in der Basisstation (100) bis zum Empfang des festen Dateninformationssignals, um eine Offenschleifensteuerung der Rückübertragungsleistung durchzuführen, um so die Rückübertragungsleistung der Mobilstation sanft zu erhöhen, und
bei Empfang des festen Dateninformationssignals von der Mobilstation Umschalten (S303) der Rückübertragungsleistungssteuerung in der Basisstation (100)von der Offenschleifensteuerung zu einer Geschlossenschleifensteuerung auf Grundlage der empfangenen Energie eines Signals auf dem Rückverkehrkanal von der Mobilstation, um die Geschlossenschleifensteuerung der Rückübertragungsleistung der Mobilstation durchzuführen.

2. Codeteilungs-Mehrfachzugriff-Übertragungsleistungssteuersystem, CDMA, mit einer Basisstation (100) und einer Mobilstation (200),
**dadurch gekennzeichnet, dass** die Mobilstation (200) aufweist:
Mittel (S200) zum Empfang einer Kanalzuweisungsnachricht von der Basisstation und
Mittel (S202) zum Starten der Übertragung eines festen Dateninformationssignals bei Empfang der Kanalzuweisungsnachricht, um den Empfang eines Signals in der Basisstation zu vereinfachen,
wobei die Basisstation (100) aufweist:
Mittel (201) zum Beginnen einer Rückübertragungsleistungssteuerung für die Mobilstation zu einem Zeitpunkt, an dem die Basisstation ein Signal unter Verwendung eines Vorwärtsverkehrskanals sendet,
Mittel (S302) zum Übertragen von Übertragungsleistungssteuerbits mit einem festen Muster unabhängig von einer empfangenen Energie bis zum Empfang des festen Dateninformationssignals, um eine Offenschleifensteuerung der Rückübertragungsleistung so durchzuführen, dass die Rückübertragungsleistung in der Mobilstation sanft erhöht wird, und
Mittel (S303) zum Schalten der Rückübertragungsleistungssteuerung von einer Offenschleifensteuerung auf eine Geschlossenschleifensteuerung bei Empfang des festen Dateninformationssignals auf Grundlage der empfangenen Energie des Signals von der Mobilstation, um die Geschlossenschleifensteuerung der Rückübertragungsleistung der Mobilstation durchzuführen.

3. CDMA-Übertragungsleistungssteuersystem nach Anspruch 2,
**dadurch gekennzeichnet, dass** die Mobilstation (200) aufweist:
einen Mobilempfangsabschnitt (201) zum Empfangen eines Vorwärtsübertragungssignals, das von der Basisstation als Empfangsvorwärtssignal übermittelt wird,
einen Mobilsignal-Trennabschnitt (202), der mit dem Mobilempfangsabschnitt verbunden ist, zum Auftrennen des empfangenen Vorwärtssignals in ein Vorwärtsdatensignal in Übertragungsleistungssteuerbits, die in der Basisstation eingefügt werden,
einen Rückübertragungsleistungssteuerabschnitt (203), der mit dem Mobilsignaltrennabschnitt verbunden ist, zum Feststellen der Rückübertragungsleistung für ein Rücksignal auf Grundlage der Übertragungsleistungssteuerbits zur Erzeugung eines bestimmten Übertragungsleistungssignals, das die Rückübertragungsleistung angibt,
einen Übertragungspegel-Steuerabschnitt (204), der mit dem Rückübertragungsleistungssteuerabschnitt verbunden ist, zum Erzeugen eines Übertragungspegelsteuersignals auf Grundlage des bestimmten Übertragungsleistungssignals,
einen Mobilsignal-Erzeugungsabschnitt (205) zur Erzeugung eines Rücksignals und
einen Mobilübertragungsabschnitt (206), der mit dem Mobilsignalerzeugungsabschnitt und dem Übertragungspegelsteuerabschnitt verbunden ist, zum Übertragen des Rücksignals mit einem Sendepegel des Rücksignals, der durch das Übertragungspegelsteuersignal gesteuert ist.

4. CDMA-Übertragungsleistungssteuersystem nach Anspruch 2,
**dadurch gekennzeichnet, dass** die Basisstation (100) aufweist:
einen Basisempfangsabschnitt (103) zum Empfangen eines Verkehrskanalsignals von der Mobilstation,
einen Basissignaltrennabschnitt (104), der mit dem Basissignalempfangsabschnitt verbunden ist, zum Auftrennen des Verkehrskanalsignals in ein erstes Datensignal, das zu Dekodieren ist, und ein zweites Datensignal, das zu Messen ist,
einen Empfangspegelmessabschnitt (105), der mit dem Basissignaltrennabschnitt verbunden ist, zur Bestimmung einer Empfangsenergie des Verkehrskanalsignals auf Grundlage des zweiten Datensignals zur Erzeugung eines Messergebnissignals, das die empfangene Energie angibt,
einen Übertragungsleistungssteuerbiterzeugungsabschnitt (106), der mit dem Empfangspegelmessabschnitt verbunden ist, zur Erzeugung von Übertragungsleistungssteuerbits aufgrund des Messergebnissignals zur Durchführung von Übertragungsleistungssteuerung für die Mobilstation,
einen Basissignalerzeugungsabschnitt (101), der mit dem Übertragungsleistungssteuerbiterzeugungsabschnitt verbunden ist, zum Einfügen der Übertragungsleistungssteuerbits in ein Vorwärtsverkehrkanalsignal zur Erzeugung eines Vorwärtssignals und
einen Basisübertragungsabschnitt (102), der mit dem Basissignalerzeugungsabschnitt verbunden ist, zum Übermitteln des Vorwärtssignals.

5. CDMA-Übertragungsleistungssteuersystem nach Anspruch 4,
**dadurch gekennzeichnet, dass** der Übertragungsleistungsteuerbiterzeugungsabschnitt (106) die Übertragungsleistungssteuerbits mit dem festen Muster bis zum Empfang des festen Dateninformationssignals überträgt, wobei der Übertragungsleistungssteuerbiterzeugungsabschnitt (106) die Übertragungsleistung für die Mobilstation auf Grundlage der empfangenen Energie nach Empfang des festen Dateninformationssignals bestimmt.

6. CDMA-Übertragungsleistungssteuersystem nach Anspruch 5,
**dadurch gekennzeichnet, dass** der Übertragungsleistungssteuerbiterzeugungsabschnitt (106) die Rückübertragungsleistungssteuerung im Fall der Steuerung der Rückübertragungsleistung unter Verwendung der Übertragungsleistungssteuerbits mit festem Muster variabel einstellt.

7. CDMA-Übertragungsleistungssteuersystem nach Anspruch 6,
**dadurch gekennzeichnet, dass** der Übertragungsleistungssteuerbiterzeugungsabschnitt (106) als variable Einstellung der Rückübertragungsleistungssteuerung alle Übertragungsleistungssteuerbits variabel einstellt, um die Rückübertragungsleistung zu erhöhen.

8. CDMA-Übertragungsleistungssteuersystem nach Anspruch 6,
**dadurch gekennzeichnet, dass** der Übertragungsleistungssteuerbiterzeugungsabschnitt (106) als variable Einstellung der Rückübertragungsleistungssteuerung alle Übertragungsleistungssteuerbits einstellt, um die Rückübertragungsleistung zu vermindern.

9. CDMA-Übertragungsleistungssteuersystem nach Anspruch 6,
**dadurch gekennzeichnet, dass** der Übertragungsleistungssteuerbiterzeugungsabschnitt (106) als variable Einstellung der Rückübertragungsleistungssteuerung die Übertragungsleistungssteuerbits einstellt, um die Rückübertragungsleistung sanft zu erhôhen.

10. CDMA-Übertragungsleistungssteuersystem nach Anspruch 2,
**dadurch gekennzeichnet, dass** die Basisstation (100) die Geschlossenschleifensteuerung der Rückübertragungsleistung für die Mobilstation gemäß dem IS-95-A-Standart von TIA/EIA durchführt.

11. Verfahren zum Steuem von Vorwärtsübertragungsleistung in einem Codeteilungs-Mehrfachzugriff-Kommunikationssystem, CDMA, mit einer Mobilstation (300) und einer Basisstation (400),
**dadurch gekennzeichnet, dass** das Verfahren die Schritte aufweist:
Beginnen einer Vorwärtsübertragungsleistungssteuerung in der Mobilstation (300) für die Basisstation zu einem Zeitpunkt, wenn die Mobilstation ein Signal unter Verwendung eines Rückverkehrskanals sendet,
Empfangen einer Kanalzuweisungsnachricht von der Mobilstation in der Basisstation (400), um unter Verwendung eines Vorwärtsverkehrssignals die Übertragung eines festen Dateninformationssignals zu starten, um den Empfang eines Signals auf dem Vorwärtsverkehrskanal in der Mobilstation zu erleichtern,
Übertragen von Übertragungsleistungssteuerbits eines festen Musters unabhängig von einer empfangenen Energie von der Basisstation bis zum Empfangen des festen Dateninformationssignals, um eine Offenschleifensteuerung der Vorwärtsübertragungsleistung durchzuführen, um somit die Vorwärtsübertragungsleistung der Basisstation sanft zu erhôhen, und
bei Empfang des festen Dateninformationssignals von der Basisstation das Schalten der Vorwärtsübertragungsleistungssteuerung in Mobilstation (300) von einer Offenschleifensteuerung in eine Geschlossenschleifensteuerung auf Grundlage der empfangenen Energie eines Signals auf dem Vorwärtsverkehrskanal von der Basisstation, um eine Geschlossenschleifensteuerung der Vorwärtsübertragungsleistung der Basisstation durchzuführen.

12. Codeteilungs-Mehrfachzugriff-(CDMA)-Übertragungsleistungssteuersystem mit einer Mobilstation (300) und einer Basisstation (400),
**dadurch gekennzeichnet, dass** die Basisstation (400) aufweist:
Mittel zum Empfang einer Kanalzuweisungsnachricht von der Mobilstation und
Mittel zum Beginnen der Übertragung eines festen Dateninformationssignals bei Empfang der Kanalzuweisungsmitteilung, um den Empfang eines Signals in der Mobilstation zu erleichtern,
wobei die Mobilstation (300) aufweist:
Mittel zum Beginnen einer Vorwärtsübertragungsleistungssteuerung für die Basisstation zu einem Zeitpunkt, wenn die Mobilstation ein Signal unter Verwendung eines Rückverkehrskanals sendet,
Mittel zum Übertragen von Übertragungsleistungssteuerbits mit einem festen Muster unabhängig von der empfangenen Energie bis zum Empfang des festen Dateninformationssignals, um eine Offenschleifensteuerung der Vorwürtsübertragungsleistung durchzuführen, um die Vorwärtsübertragungsleistung in der Basisstation sanft zu erhöhen, und
Mittel zum Schalten der Vorwärtsübertragungsleistungssteuerung von der Offenschleifensteuerung zu einer Geschlossenschleifensteuerung auf Grundlage der empfangenen Energie des Signals von der Basisstation bei Empfang des festen Dateninformationssignals, um die Geschlossenschleifensteuerung der Vorwärtsübertragungsleistung der Basisstation durchzuführen.

13. CDMA-Übertragungsleistungssteuersystem nach Anspruch 12,
**dadurch gekennzeichnet, dass** die Basisstation (400) aufweist:
einen Basisempfangsabschnitt (401) zum Empfangen eines Rückübertragungssignals, das von der Mobilstation gesendet wird, als ein empfangenes Rücksignal,
einen Basissignal-Trennabschnitt (402), der mit dem Basisempfangsabschnitt verbunden ist, zum Trennen des empfangenen Rücksignals in ein Rückdatensignal in Übertragungsleistungssteuerbits, die in der Mobilstation eingefügt werden,
einen Vorwärtsübertragungsleistungssteuerabschnitt (403), der mit dem Basissignaltrennabschnitt verbunden ist, zum Feststellen der Vorwärtsübertragungsleistung für ein Vorwärtssignal auf Grundlage der Übertragungsleistungssteuerbits, um ein bestimmtes Übertragungsleistungssignal zu erzeugen, das die Vorwärtsübertragungsleistung angibt,
einen Übertragungspegel-Steuerabschnitt (404), der mit dem Vorwärtsübertragungsleistungssteuerabschnitt verbunden ist, zum Erzeugen eines Übertragungspegelsteuersignals auf Grundlage des bestimmten Übertragungsleistungssignals,
einen Basissignal-Erzeugungsabschnitt (405) zur Erzeugung eines Vorwärtssignals und
einen Basisübertragungsabschnitt (406), der mit dem Basissignalerzeugungsabschnitt und dem Übertragungspegelsteuerabschnitt verbunden ist, zum Übertragen des Vorwärtssignals mit einem Sendepegel des Vorwärtssignals, der durch das Übertragungspegelsteuersignal gesteuert ist.

14. CDMA-Übertragungsleistungssteuersystem nach Anspruch 12,
**dadurch gekennzeichnet, dass** die Mobilstation (300) aufweist:
einen Mobilempfangsabschnitt (303) zum Empfangen eines Verkehrskanalsignals von der Basisstation,
einen Mobilsignal-Trennabschnitt (304), der mit dem Mobilsignalempfangsabschnitt verbunden ist, zum Trennen des Verkehrskanalsignals in ein erstes Datensignal, das zu Dekodieren ist, und ein zweites Datensignal, das zu Messen ist,
einen Empfangspegelmessabschnitt (305), der mit dem Mobilsignaltrennabschnitt verbunden ist, für eine Empfangsenergie des Verkehrskanalsignals auf Grundlage des zweiten Datensignals, zur Erzeugung eines Messergebnissignals, das die Empfangsenergie angibt,
einen Übertragungsleistungssteuerbiterzeugungsabschnitt (306), der mit dem Empfangspegelmessabschnitt verbunden ist, zur Erzeugung von Übertragungsleistungssteuerbits aufgrund des Messergebnissignals zur Durchführung von Übertragungsleistungssteuerung für die Basisstation,
einen Mobilsignaler-Erzeugungsabschnitt (301), der mit dem Übertragungsleistungssteuerbiterzeugungsabschnitt verbunden ist, zum Einfügen der Übertragungsleistungssteuerbits in ein Rückverkehrkanalsignal zur Erzeugung eines Rücksignals und
einen Mobilübertragungsabschnitt (302), der mit dem Mobilsignalerzeugungsabschnitt verbunden ist, zum Übermitteln des Rücksignals.

15. CDMA-Übertragungsleistungssteuersystem nach Anspruch 14,
**dadurch gekennzeichnet, dass** der Übertragungsleistungsteuerbiterzeugungsabschnitt (306) die Übertragungsleistungssteuerbits mit dem festen Muster bis zum Empfang des festen Dateninformationssignals erzeugt, wobei der Übertragungsleistungssteuerbiterzeugungsabschnitt (306) die Vorwärtsübertragungsleistung für die Basisstation auf Grundlage der Empfangsenergie nach Empfang des festen Dateninformationssignals erzeugt.

16. CDMA-Übertragungsleistungssteuersystem nach Anspruch 15,
**dadurch gekennzeichnet, dass** der Übertragungsleistungssteuerbiterzeugungsabschnitt (306) die Vorwärtsübertragungsleistungssteuerung im Fall der Steuerung der Vorwärtsübertragungsleistung unter Verwendung der Übertragungsleistungssteuerbits mit fixem Muster variabel einstellt.

17. CDMA-Übertragungsleistungssteuersystem nach Anspruch 16,
**dadurch gekennzeichnet, dass** der Übertragungsleistungssteuerbiterzeugungsabschnitt (306) als variable Einstellung der Vorwärtsübertragungsleistungssteuerung alle Übertragungsleistungssteuerbits einstellt, um die Vorwärtsübertragungsleistung zu erhöhen.

18. CDMA-Übertragungsleistungssteuersystem nach Anspruch 16,
**dadurch gekennzeichnet, dass** der Übertragungsleistungssteuerbiterzeugungsabschnitt (306) als variable Einstellung der Vorwärtsübertragungsleistungssteuerung alle Übertragungsleistungssteuerbits einstellt, um die Vorwärtsübertragungsleistung zu vermindern.

19. CDMA-Übertragungsleistungssteuersystem nach Anspruch 16,
**dadurch gekennzeichnet, dass** der Übertragungsleistungssteuerbiterzeugungsabschnitt (306) als variable Einstellung der Vorwärtsübertragungsleistungssteuerung die Übertragungsleistungssteuerbits so einstellt, um die Vorwärtsübertragungsleistung sanft zu erhöhen.

## Revendications

1. Procédé de commande de puissance de transmission inverse dans un système de communication mobile à accès multiple à répartition par code, CDMA, comprenant une station de base (100) et une station mobile (200), **caractérisé en ce que** ledit procédé comprend les étapes consistant à :
lancer (S201) dans ladite station de base (100), une commande de puissance de transmission inverse pour ladite station mobile (200) à un moment auquel ladite station de base transmet un signal en utilisant un canal de renvoi du trafic ;
recevoir (S202), dans ladite station mobile (200), un message d'affectation de canal en provenance de ladite station de base pour lancer, en utilisant un canal d'inversion du trafic, la transmission d'un signal d'information de données fixes de manière à faciliter la réception d'un signal sur le canal d'inversion du trafic de ladite station de base ;
transmettre (S301), à partir de ladite station de base (100), des bits de commande de la puissance de transmission d'un modèle fixe, quelle que soit l'énergie reçue jusqu'à réception du signal d'information de données fixes, pour effectuer une commande en boucle ouverte de la puissance de transmission inverse de manière à augmenter progressivement la puissance de transmission inverse dans ladite station mobile; et
à la réception du signal d'information de données fixes en provenance de ladite station mobile, commuter (S303), dans ladite station de base (100), ladite commande de puissance de transmission inverse de la commande en boucle ouverte à une commande à boucle fermée sur la base de l'énergie reçue d'un signal sur le canal d'inversion du trafic de ladite station mobile pour effectuer la commande à boucle fermée de la puissance de transmission inverse de ladite station mobile.

2. Système de commande de puissance de transmission à accès multiple à répartition par code, CDMA, comprenant une station de base (100) et une station mobile (200), **caractérisé en ce que** ladite station mobile (200) comprend :
un moyen (S202) de réception d'un message d'affectation de canal en provenance de ladite station de base ; et
un moyen (S202) de lancement, à la réception du message d'affectation de canal, de la transmission d'un signal d'information de données fixes de manière à faciliter la réception d'un signal dans ladite station de base,
ladite station de base (100) comprenant :
un moyen (S201) de lancement de la commande de puissance de transmission inverse pour ladite station mobile à un moment auquel ladite station de base transmet un signal en utilisant un canal de renvoi du trafic ;
un moyen (S302) de transmission des bits de commande de puissance de transmission d'un modèle fixe, quel que soit une énergie reçue, jusqu'à réception du signal d'information de données fixes pour effectuer une commande en boucle ouverte de la puissance de transmission inverse de manière à augmenter progressivement la puissance de transmission inverse dans ladite station mobile ; et
un moyen (S303) de commutation, à la réception du signal d'information de données fixes, de ladite commande de puissance de transmission inverse de la commande en boucle ouverte à une commande à boucle fermée sur la base de l'énergie reçue du signal en provenance de ladite station mobile pour effectuer la commande à boucle fermée sur la puissance de transmission inverse de ladite station mobile.

3. Système de commande de puissance de transmission CDMA selon la revendication 2, **caractérisé en ce que** ladite station mobile (200) comprend :
une section de réception mobile (201) pour la réception d'un signal de renvoi de la transmission, transmis depuis la station de base comme un signal de renvoi reçu ;
une section de séparation de signaux mobile (202), reliée à ladite section de réception mobile, pour la séparation du signal de renvoi reçu en un signal de données de renvoi en bits de commande de la puissance de transmission qui sont insérés dans ladite station de base ;
une section de commande de la puissance de transmission inverse (203), reliée à ladite section de séparation des signaux mobile, pour déterminer la puissance de transmission inverse pour un signal inversé sur la base des bits de commande de la puissance de transmission pour produire un signal de puissance de transmission déterminé indiquant la puissance de transmission inverse ;
une section de commande du niveau de transmission (204), reliée à ladite section de commande de la puissance de transmission inverse, pour produire un signal de commande du niveau de transmission sur la base du signal de puissance de transmission déterminé ;
une section de génération de signaux mobile (205) pour générer un signal inverse ; et
une section de transmission mobile (206), reliée à ladite section de génération de signaux mobile et à ladite section de commande du niveau de transmission, pour transmettre le signal inversé avec un niveau de transmission du signal inversé commandé par le signal de commande du niveau de transmission.

4. Système de commande de la puissance de transmission CDMA selon la revendication 2, **caractérisé en ce que** ladite station de base (100) comprend :
une section de réception de base (103) pour la réception d'un signal de canal de trafic en provenance de ladite station mobile ;
une section de séparation des signaux de base (104) reliée à ladite section de réception de base, pour la séparation du signal de canal de trafic en un premier signal de données à décoder et un deuxième signal de données à mesurer ;
une section de mesure du niveau reçue (105) reliée à ladite section de séparation des signaux de base, pour une énergie reçue d'un signal de canal de trafic sur la base du deuxième signal de données pour produire un signal de résultat mesuré indiquant l'énergie reçue ;
une section de génération de bits de commande de la puissance de transmission (106) reliée à ladite section de mesure du niveau reçu, pour générer, sur la base du signal reçu mesuré, les bits de commande de la puissance de transmission, pour effectuer la commande de puissance de transmission pour ladite station mobile ;
une section de génération de signaux de base (101) reliée à ladite section de génération de bits de commande de la puissance de transmission, pour insérer les bits de commande de la puissance de transmission dans un signal de canal de renvoi du trafic pour générer un signal de renvoi ; et
une section de transmission de base (102), reliée à ladite section de génération des signaux de base, pour transmettre le signal de renvoi.

5. Système de commande de la puissance de transmission CDMA selon la revendication 4, **caractérisé en ce que** ladite section de génération de bits de commande de la puissance de transmission (106) génère les bits de commande de la puissance de transmission du modèle fixé jusqu'à réception du signal d'information de données fixes, ladite section de génération de bits de commande de la puissance de transmission (106) déterminant la puissance de transmission inverse pour ladite station mobile sur la base de l'énergie reçue après réception du signal d'information de données fixes.

6. Système de commande de la puissance de transmission CDMA selon la revendication 5, **caractérisé en ce que** ladite section de génération de bits de commande de la puissance de transmission (106) détermine, de manière variable, la commande de puissance de transmission inverse dans le cas d'une commande de la puissance de transmission inverse en utilisant les bits de commande de la puissance de transmission du modèle fixe.

7. Système de commande de la puissance de transmission CDMA selon la revendication 6, **caractérisé en ce que** ladite section de génération des bits de commande de la puissance de transmission (106) détermine, comme une détermination variable de la commande de puissance de transmission inverse, tout les bits de commande de la puissance de transmission de manière à augmenter la puissance de transmission inverse.

8. Système de commande de la puissance de transmission CDMA selon la revendication 6, **caractérisé en ce que** ladite section de génération de bits de commande de la puissance de transmission (106) détermine, comme une détermination variable de la commande de puissance de transmission inverse, tous les bits de commande de puissance de transmission de manière à diminuer la puissance de transmission inverse.

9. Système de commande de la puissance de transmission CDMA selon la revendication 6, **caractérisé en ce que** ladite section de génération de bits de commande de la puissance de transmission (106) détermine, comme une détermination variable de la commande de puissance de transmission inverse, les bits de commande de la puissance de transmission de manière à augmenter progressivement la puissance de transmission inverse.

10. Système de commande de la puissance de transmission CDMA selon la revendication 2, **caractérisé en ce que** ladite station de base (100) effectue la commande en boucle fermée de la puissance de transmission inverse pour ladite station mobile selon la norme IS-95-A de TIA/EIA.

11. Procédé de contrôle de la puissance de transmission de renvoi dans un système de communication mobile à accès multiple à répartition par code, CDMA, comprenant une station mobile (300) et une station de base (400), **caractérisé en ce que** ledit procédé comprend les étapes consistant à :
lancer, dans ladite station mobile (300), une commande de puissance de transmission de renvoi pour ladite station de base à un moment auquel ladite station mobile transmet un signal en utilisant un canal d'inversion du trafic ;
recevoir, dans ladite station de base (400), un message d'affectation de canal en provenance de ladite station mobile pour lancer, en utilisant un canal de renvoi de trafic, la transmission d'un signal d'information de données fixes de manière à faciliter la réception d'un signal sur le canal de renvoi de trafic dans ladite station mobile ;
transmettre, à partir de ladite station mobile (300), les bits de commande de puissance de transmission d'un modèle fixe, quelle que soit l'énergie reçue, jusqu'à réception du signal d'information de données fixes pour effectuer une commande à boucle ouverte de la puissance de transmission de renvoi de manière à augmenter progressivement la puissance de transmission de renvoi dans ladite station de base ; et
à la réception du signal d'information de données fixes en provenance de ladite station de base, commuter, dans ladite station de base (300), ladite commande de puissance de transmission de renvoi de la commande à boucle ouverte à une commande à boucle fermée sur la base de l'énergie reçue d'un signal sur le canal de renvoi du trafic en provenance de ladite station de base pour effectuer la commande en boucle fermée de la puissance de transmission de renvoi de ladite station de base.

12. Système de commande de la puissance de transmission à accès multiple à répartition par code (CDMA) comprenant une station mobile (300) et une station de base (400), **caractérisé en ce que** ladite station de base (400) comprend :
un moyen de réception d'un message d'affectation de canal en provenance de ladite station mobile ; et
un moyen de lancement, à la réception du message d'affectation de canal, de la transmission d'un signal d'information de données fixes de manière à faciliter la réception d'un signal sur ladite station mobile,
ladite station mobile (300) comprenant :
un moyen de lancement d'une commande de puissance de transmission de renvoi pour ladite station mobile à un moment auquel ladite station mobile transmet un signal en utilisant un canal d'inversion du trafic ;
un moyen de transmission des bits de commande de la puissance de transmission d'un modèle fixe, quelle que soit l'énergie reçue, jusqu'à réception du signal d'information de données fixes pour effectuer une commande à boucle ouverte de la puissance de transmission de renvoi de manière à augmenter progressivement la puissance de transmission de renvoi dans ladite station de base ; et
un moyen de commutation, à la réception du signal d'information de données fixes, de ladite commande de puissance de transmission de renvoi de la commande à boucle ouverte à une commande en boucle fermée sur la base de l'énergie reçue du signal en provenance de ladite station de base pour effectuer la commande en boucle fermée de la puissance de transmission de renvoi de ladite station de base.

13. Système de commande de la puissance de transmission CDMA selon la revendication 12, **caractérisé en ce que** ladite station de base (400) comprend :
une section de réception de base (401) pour recevoir un signal de transmission inverse transmis en provenance de ladite station mobile comme un signal inverse reçu ;
une section de séparation de signaux de base (402) reliée à ladite section de réception de base, pour séparer le signal inverse reçu en un signal de données inverse en bits de commande de la puissance de transmission qui sont insérés dans ladite station mobile ;
une section de commande de la puissance de transmission de renvoi (403) reliée à la section de séparation des signaux de base, pour déterminer la puissance de transmission de renvoi pour un signal de renvoi sur la base des bits de commande de la puissance de transmission pour produire un signal de puissance de transmission déterminé indiquant la puissance de transmission de renvoi ;
une section de commande du niveau de transmission (404), relié à ladite section de commande de la puissance de transmission de renvoi, pour produire un signal de commande du niveau de transmission sur la base du signal de puissance de transmission déterminé;
une section de génération de signaux de base (405) pour générer un signal de renvoi ; et
une section de transmission de base (406), reliée à ladite section de génération de signaux de base et à ladite section de commande du niveau de transmission, pour transmettre le signal de renvoi avec un niveau de transmission du signal de renvoi commandé par le signal de commande du niveau de transmission.

14. Système de commande de la puissance de transmission CDMA, selon la revendication 12, **caractérisé en ce que** ladite station mobile (300) comprend :
une section de réception mobile (303) pour recevoir un signal de canal de trafic en provenance de ladite station de base ;
une section de séparation des signaux mobiles (304), reliée à ladite section de réception mobile, pour séparer le signal de canal de trafic en un premier signal de données à décoder et un second signal de données à mesurer ;
une section de mesure du niveau reçu (305) reliée à ladite section de séparation de signaux mobiles, pour une énergie reçue du signal de canal de trafic sur la base du deuxième signal de données pour produire un signal de résultat mesuré indiquant l'énergie reçue ;
une section de génération de bits de commande de la puissance de transmission (306), reliée à ladite section de mesure du niveau reçu, pour générer, sur la base du signal de résultat mesuré, les bits de commande de la puissance de transmission pour effectuer la commande de puissance de transmission pour ladite station de base ;
une section de génération de signaux mobile (301), reliée à ladite section de génération de bits de commande de la puissance de transmission, pour insérer les bits de commande de la puissance de transmission dans un signal de canal d'inversion de trafic pour générer un signal inversé ; et
une section de transmission mobile (302), reliée à ladite section de génération de signaux mobiles, pour transmettre le signal inversé.

15. Système de commande de la puissance de transmission CDMA selon la revendication 14, **caractérisé en ce que** ladite section de génération de bits de commande de la puissance de transmission (306) génère les bits de commande de la puissance de transmission du modèle fixe jusqu'à réception du signal d'information de données fixes, ladite section de génération de bits de commande de la puissance de transmission (306) déterminant la puissance de transmission de renvoi pour ladite station de base sur la base de l'énergie reçue après réception du signal d'information de données fixes.

16. Système de commande de la puissance de transmission CDMA selon la revendication 15, **caractérisé en ce que** ladite section de génération de bits de commande de la puissance de transmission (306) détermine de manière variable la commande de puissance de transmission de renvoi dans un cas de commande de la puissance de transmission de renvoi en utilisant les bits de commande de la puissance de transmission du modèle fixe.

17. Système de commande de la puissance de transmission CDMA selon la revendication 16, **caractérisé en ce que** ladite section de génération de bits de commande de la puissance de transmission (306) détermine, comme une détermination variable de la commande de puissance de transmission de renvoi, tous les bits de commande de la puissance de transmission de manière à augmenter la puissance de transmission de renvoi.

18. Système de commande de la puissance de transmission CDMA selon la revendication 16, **caractérisé en ce que** ladite section de génération de bits de commande de la puissance de transmission (306) détermine, comme une détermination variable de la commande de la puissance de transmission de renvoi, tous les bits de commande de la puissance de transmission de manière à diminuer la puissance de transmission de renvoi.

19. Système de commande de la puissance de transmission CDMA selon la revendication 16, **caractérisé en ce que** ladite section de génération de bits de commande de la puissance de transmission (306) détermine, comme une détermination variable de la commande de la puissance de transmission de renvoi, les bits de commande de la puissance de transmission de manière à augmenter progressivement la puissance de transmission de renvoi.
